(19) Europäisches Patentamt
European Patent Office
Office européen des brevets

(11) **EP 2 488 279 B1**

(12) **FASCICULE DE BREVET EUROPEEN**

(45) Date de publication et mention
de la délivrance du brevet:
**16.11.2016 Bulletin 2016/46**

(21) Numéro de dépôt: **10781964.1**

(22) Date de dépôt: **11.10.2010**

(51) Int Cl.:
***B01D 53/56*** *(2006.01)*

(86) Numéro de dépôt international:
**PCT/FR2010/052135**

(87) Numéro de publication internationale:
**WO 2011/045509 (21.04.2011 Gazette 2011/16)**

(54) **UTILISATION D'UN ELEMENT A BASE DE BETON POUR LA SUPPRESSION DU NO2**

VERWENDUNG EINES ELEMENTES AUF BETON-BASIS FÜR DIE ENTFERNUNG VON NO2

USE OF AN ELEMENT BASED ON CONCRETE FOR THE REMOVAL OF NO2

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.10.2009 FR 0904868**

(43) Date de publication de la demande:
**22.08.2012 Bulletin 2012/34**

(73) Titulaire: **Lafarge
75116 Paris (FR)**

(72) Inventeurs:
• **DUBOIS-BRUGGER, Isabelle
F-69680 Chassieu (FR)**
• **DYKMAN, Mélanie
F-38460 Cremieu (FR)**
• **HORGNIES, Matthieu
F-69008 Lyon (FR)**

(74) Mandataire: **Regimbeau
20, rue de Chazelles
75847 Paris Cedex 17 (FR)**

(56) Documents cités:
**EP-A1- 1 900 702     US-A1- 2005 016 418**

• **"Concrete" In: "Ullmann's Encyclopedia of
Industrial Chemistry", 2012, Wiley-VCH,
Weinheim**
• **DATABASE WPI Week 200765, Derwent
Publications Ltd., London, GB; AN 2007-693471
& JP 2007 170040 A (WATANABE O) 05 Juillet
2007**

Remarques:
Le dossier contient des informations techniques
présentées postérieurement au dépôt de la demande
et ne figurant pas dans le présent fascicule.

**Description**

La présente invention concerne l'utilisation d'un élément à base de béton pour la suppression du dioxyde d'azote de l'atmosphère.

De nombreux composés volatils participent à la pollution de l'air. Parmi ceux-ci, on distingue les oxydes d'azote, également appelés NOx, qui sont notamment issus de la combustion d'énergie (fossile) dans les moteurs thermiques (gaz d'échappement des véhicules automobiles, chaudières, etc.).

Plusieurs demandes de brevet décrivent des procédés de suppression de composés volatils et/ou de gaz, notamment des oxydes d'azote, qui consistent à utiliser un élément comprenant un corps en béton et des particules à effet photocatalytique, disposées dans la masse du corps en béton ou dans un revêtement recouvrant le corps en béton.

A titre d'exemple, la demande de brevet internationale WO9805601 déposée au nom d'Italcementi SPA décrit un liant hydraulique qui contient, dans la masse, des particules photocatalytiques, par exemple du dioxyde de titane anatase (photocatalytique), capables d'oxyder les polluants en présence de lumière, d'oxygène et d'eau.

Un inconvénient des procédés décrits dans ces demandes de brevet est qu'ils utilisent des agents photocatalytiques. Les agents photocatalytiques sont généralement des matériaux d'un coût élevé. En outre, les procédés décrits dans ces demandes de brevet se basent sur le principe que l'oxydation des polluants est réalisée en présence de lumière, de sorte que l'action dépolluante des procédés décrits dans ces demandes de brevet n'a lieu qu'une partie de la journée et lorsque les conditions météorologiques sont favorables.

Le document JP2007-170040 décrit une méthode pour désodoriser comprenant la mise en oeuvre d'un béton comprenant du charbon actif.

Le but de la présente invention est de proposer un procédé de suppression du dioxyde d'azote de l'atmosphère mettant en oeuvre un élément à base de béton ne comportant pas d'agent photocatalytique.

Ce but est atteint par l'utilisation d'un élément selon la revendication 1.

L'invention offre comme avantage de participer à la réduction de la concentration du dioxyde d'azote dans l'atmosphère.

Un autre avantage de la présente invention est que l'élément peut en outre jouer un rôle d'élément structurel, isolant ou décoratif selon les propriétés du corps en béton.

Enfin l'invention a pour avantage de pouvoir être mise en oeuvre dans l'industrie du bâtiment, l'industrie cimentière, dans les marchés de la construction (bâtiment, génie civil, routes ou usine de préfabrication), ou dans les centrales à béton.

D'autres avantages et caractéristiques de l'invention apparaîtront clairement à la lecture de la description et des exemples donnés à titre purement illustratifs et non limitatifs qui vont suivre.

Par le terme « composition hydraulique », on entend définir toute composition présentant une prise hydraulique, et tout particulièrement les mortiers et bétons destinés à l'ensemble des marchés de la construction (bâtiment, génie civil ou usine de préfabrication).

Par l'expression « liant hydraulique », on entend selon la présente invention un matériau pulvérulent qui, gâché avec de l'eau, forme une pâte qui fait prise et durcit par suite de réactions et de processus d'hydratation, et qui après durcissement, conserve sa résistance et sa stabilité même sous l'eau. Le liant hydraulique peut être un ciment, par exemple un ciment Portland.

Par l'expression « ciment Portland », on entend selon l'invention un ciment de type CEM I, CEM II, CEM III, CEM IV ou CEM V selon la norme « Ciment » NF EN 197-1.

Par le terme « béton », on entend un mélange de liant hydraulique, de granulats, d'eau, éventuellement d'additifs, et éventuellement d'additions minérales, comme par exemple le béton hautes performances, le béton très hautes performances, le béton autoplaçant, le béton autonivelant, le béton autocompactant, le béton fibré, le béton drainant (perméable), le béton léger, le béton prêt à l'emploi et/ou coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers. Dans ce cas précis, le béton comprend un mélange de liant hydraulique, de sable, d'eau et éventuellement d'additifs et éventuellement d'additions minérales. Le terme « béton » selon l'invention désigne indistinctement le béton frais ou le béton durci.

Selon l'invention le terme « granulats » désigne des graviers, des gravillons et/ou du sable.

Par le terme « sable », on entend définir des granulats d'une taille granulométrique moyenne comprise de 0 à 6 mm, de préférence de 0 à 4 mm (et strictement supérieure à 0 mm). Ils peuvent être de toute nature minérale, calcaire, siliceuse ou silico-calcaire ou autre. Cette définition englobe également des fillers ou d'autres matériaux inorganiques particulaires susceptibles d'être présents dans des compositions hydrauliques.

On entend par le terme « gravillons » selon la présente invention des granulats ayant une granulométrie comprise de 4 à 20 mm, de préférence supérieure comprise de 6 à 20 mm.

On entend par le terme « graviers » selon la présente invention des granulats ayant une granulométrie strictement supérieur à 20 mm. Par l'expression « suppression du dioxyde d'azote », on entend le retrait du dioxyde d'azote de l'atmosphère..

Par « agent photocatalytique », on entend tout matériau adapté à accélérer la vitesse d'une réaction chimique sous l'action de la lumière. Il s'agit par exemple de dioxyde de titane photocatalytique.

Par « charbon actif » ou « charbon activé », on entend un matériau sous forme d'une poudre constituée essentiellement de matière carbonée à structure microporeuse.

Par « charbon actif modifié », on entend un charbon actif greffé avec des fonctions chimiques supplémentaires (par exemple des fonctions amine ou des fonctions éther, cyclodextrine...) ou traité thermiquement.

Les inventeurs ont mis en évidence que, contrairement à ce qui est généralement admis, l'adsorption de gaz de l'atmosphère et/ou de composés volatils de l'atmosphère pouvait être obtenue sans utiliser d'agents photocatalytiques. Ceci est obtenu en utilisant un élément ayant une porosité de surface strictement supérieure à 8 %, ledit élément comprenant un corps monobloc en béton dont le volume est supérieur à 1 L et, dans le corps en béton et/ou en surface du corps en béton, un composé ayant une surface spécifique d'échange BET supérieure à 100 m$^2$/g, ledit élément ne comprenant pas d'agent photocatalytique.

Les inventeurs ont mis en évidence une adsorption des composés volatils de l'atmosphère et des gaz de l'atmosphère en surface du béton et en surface du composé ayant une surface spécifique d'échange BET supérieure à 100 m$^2$/g. De préférence, la surface spécifique d'échange BET du composé est supérieure à 200 m$^2$/g, avantageusement supérieure à 500 m$^2$/g.

L'élément selon l'invention est utilisé pour l'adsorption du dioxyde d'azote de l'atmosphère. Il s'agit donc de l'adsorption du dioxyde d'azote présent dans l'air respiré par tout individu, que ce soit à l'intérieur ou à l'extérieur d'un bâtiment. L'élément selon l'invention est donc en contact direct avec l'atmosphère. La présente invention ne concerne pas l'adsorption de gaz ou de composés volatils présents dans des gaz d'échappement d'installations industrielles, par exemple de fours industriels.

Le corps est réalisé en béton, c'est-à-dire en un mélange au moins d'un liant hydraulique, de granulats et d'eau. Lorsque les granulats ne comprennent que du sable, le béton peut être appelé mortier. De préférence, le béton n'est pas un coulis de ciment qui correspond à un mélange de ciment et d'eau et qui ne comprend pas de granulats.

Selon un exemple de réalisation, le volume du corps en béton est supérieur à 1 L, de préférence supérieur à 10 L, encore plus préférentiellement supérieur à 100 L, en particulier supérieur à 1 m$^3$.

Le composé est choisi parmi le groupe comprenant le charbon actif et le charbon actif modifié. De préférence, le composé est le charbon actif.

De préférence, le composé comprend des particules ayant un diamètre moyen supérieur à 1 μm. Avantageusement le composé comprend des particules ayant un diamètre compris de 0,1 à 100 μm. Le diamètre d'une particule correspond au diamètre de la sphère de même volume que la particule. Le diamètre moyen de particules correspond à la moyenne des diamètres des particules. Le diamètre et le diamètre moyen peuvent être mesurés par observation au microscope (optique ou électronique).

De préférence, l'élément a une porosité de surface supérieure à 8 %, de préférence supérieure ou égale à 10 %, avantageusement, supérieure ou égale à 13 %. De préférence, le corps en béton a une porosité de surface supérieure à 8 %, de préférence supérieure ou égale à 10 %, avantageusement, supérieure ou égale à 13 %. Le diamètre moyen des pores en surface du corps en béton est supérieur à 0,10 μm, de préférence supérieur à 0,25 μm, de préférence supérieure à 0,30 μm. Le diamètre moyen des pores en surface du corps en béton et la porosité de surface sont, par exemple, mesurés par porosimétrie au mercure.

Le taux d'adsorption de chaque composé volatil de l'atmosphère ou gaz de l'atmosphère peut être différent selon le type de composé volatil ou de gaz. De préférence, le taux d'adsorption de dioxyde d'azote par unité de surface de l'élément est supérieur à 0,5 ppbv/cm$^2$, en particulier sous un flux de dioxyde d'azote de 250 ppbv (partie par milliard en volume). Avantageusement, le taux d'adsorption de dioxyde d'azote par unité de surface est supérieur à 0,5 ppbv/cm$^2$ à 60 heures.

Les inventeurs ont mis en évidence que le monoxyde d'azote absorbé pouvait être libéré en chauffant l'élément en béton alors que le dioxyde d'azote absorbé n'était pas libéré en chauffant l'élément en béton, notamment jusqu'à une température de l'ordre 130°C.

Le composé peut être ajouté dans la masse du béton. Dans ce cas, le composé peut être ajouté, notamment sous forme de particules solides, au moment du mélange des granulats, du liant hydraulique et de l'eau lors de la fabrication du béton. A titre de variante, le composé peut être mélangé, sous forme de particules solides, au liant hydraulique pour obtenir un prémix.

Selon un exemple de réalisation, le corps en béton comprend dans la masse de 0,001 % à 30 %, de préférence de 0,01 % à 20 %, encore plus préférentiellement de 0,1 % à 10 %, en masse du composé par rapport à la masse de ciment contenu dans le corps en béton.

Le corps en béton peut être obtenu par coulage du béton dans un moule, le composé étant disposé dans une composition de démoulage du moule, par exemple une huile de démoulage, de façon à obtenir un transfert au moins partiel du composé depuis les parois du moule jusqu'en surface du corps en béton.

La composition de démoulage comprend de 0,001 % à 30 %, de préférence de 0,01 % à 20 % encore plus préférentiellement de 0,1 % à 10 %, en masse du composé par rapport à la masse de la composition de démoulage.

De préférence, la composition de démoulage comprend au moins une huile et au moins un sel de calcium. De préférence, l'huile est une huile d'origine végétale ou animale. Particulièrement préférée est une composition de démoulage dans laquelle l'huile comprend un ou plusieurs composés choisis parmi les esters d'acides gras, et notamment les triglycérides d'acides gras, et les esters d'acides gras de neopentylpolyol. Le sel de calcium est de préférence choisi parmi le chlorure, le bromure, le nitrite et le thiocyanate de calcium.

Avantageusement, la composition comprend 0,1 à 70 % en poids de sel de calcium. La composition de démoulage peut être notamment formulée sous forme de solution, d'émulsion ou de suspension. La composition de démoulage peut comprendre en outre un ou plusieurs composés choisis parmi un stabilisant, un dispersant, un tensioactif, un conservateur, un solvant, un épaississant et un agent de thixotropie, notamment un ou plusieurs composés choisis parmi un agent hydrofuge et un pigment. Elle peut comprendre à titre d'agent hydrofuge notamment des produits à base de silicones, de silanes, de siloxanes ou des sels métalliques d'acides gras. Elle peut comprendre à titre de pigment en particulier un ou plusieurs oxydes ou hydroxydes inorganiques et tout particulièrement un ou plusieurs pigments choisis parmi le dioxyde de titane, les oxydes de fer, de cobalt ou de chrome.

L'enduction du moule avec la composition de démoulage peut être réalisée par des moyens connus en soi, par exemple par application au pinceau, au chiffon, ou rouleau, par trempage ou encore par pulvérisation, ce dernier mode d'application étant préféré.

La quantité de composition de démoulage à appliquer est choisie de manière à être suffisante pour former un film continu sur l'ensemble de la surface du moule destinée à être en contact avec la composition à prise hydraulique. L'épaisseur du film de la composition de démoulage formé est généralement de l'ordre de 1 à 15 micromètres.

A titre indicatif, il est généralement suffisant d'appliquer 5 à 30 g/m$^2$, par exemple de 5 à 15 g/m$^2$ d'une composition de démoulage ayant une viscosité d'environ 50 mPa.s sur un moule métallique. La quantité appliquée sera plus importante sur des moules absorbants, par exemple en bois, ou pour une formulation de viscosité plus élevée.

Des exemples de réalisation vont maintenant être décrits en relation avec les figures parmi lesquelles :

les figures 1 et 2 représentent les évolutions de teneurs, respectivement en monoxyde d'azote et en dioxyde d'azote, d'un flux gazeux après son passage au niveau de plusieurs échantillons ;
la figure 3 représente les évolutions des taux de dioxyde d'azote adsorbés par unité de surface pour les mêmes échantillons ; et
la figure 4 représente l'évolution des teneurs de dioxyde d'azote et de monoxyde d'azote d'un flux gazeux après son passage au niveau d'un échantillon selon l'invention lors d'une phase de désorption de l'échantillon.

EXEMPLES

La présente invention est illustrée par les exemples suivants non limitatifs. Dans les exemples, les matériaux utilisés sont disponibles auprès des fournisseurs suivants :

| | Produit | Fournisseur |
|---|---|---|
| (1) | Ciment Portland | Lafarge-France Val d'Azergues |
| (2) | Ciment Portland | Lafarge-France St Pierre la Cour |
| (3) | Ciment Portland blanc | Lafarge-France Le Teil |
| (4) | Ciment TX Active avec TiO$_2$ photocatalytique | Italcementi |
| (5) | Sable 0/1 mm | Lafarge France (St Bonnet La Petite Craz) |
| (6) | Sable 0/4 mm | Lafarge France (St Bonnet La Petite Craz) |
| (7) | Sable 1/5 mm | Lafarge France (St Bonnet La Petite Craz) |
| (8) | Sable BE01 (D50 à 307 μm) | Sibelco France (Carrière de SIFRACO BEDOIN) |
| (9) | Filler calcaire BETOCARB HP Orgon | OMYA |
| (10) | Filler calcaire Durcal 1 | OMYA |
| (11) | Fumées de silice MST | SEPR (Société Européenne des Produits Réfractaires) |
| (12) | Graviers 5/10 mm | Lafarge France (St Bonnet La Petite Craz) |
| (13) | Adjuvant Optima 203 | Chryso |
| (14) | Adjuvant Ductal F2 | Chryso |
| (15) | Huile végétale Dem ECO2 | Chryso |
| (16) | Charbon actif SA2 | NORIT |

Formulation de mortier

La formulation (1) de mortier utilisée pour réaliser les essais est décrite dans le tableau 1 suivant :

Tableau 1 : Formulation (1) de mortier

| Composant | Proportion (% en poids par rapport au poids de la composition) |
|---|---|
| Ciment Portland Lafarge Val d'Azergues | 23,6 |
| Filler calcaire BETOCARB HP Orgon | 12,2 |
| Sable 0/4 | 51,2 |
| Eau de pré-mouillage | 1,1 |
| Eau de gâchée | 11,7 |
| Adjuvant Optima 203 | 0,26 |

Le rapport eau de gâchée/ciment est de 0,496.
Le ciment Portland de Lafarge est un ciment CEM I 52,5 PMES.

Méthode de préparation du mortier

Le mortier est réalisé au moyen d'un malaxeur de type Perrier. L'ensemble de l'opération est réalisé à 20°C. La méthode de préparation comprend les étapes suivantes :

• Mettre les sables dans un bol de malaxeur ;
• A T = 0 seconde : débuter le malaxage à petite vitesse (140 tours/min) et ajouter simultanément l'eau de mouillage en 30 secondes, puis continuer à malaxer à petite vitesse (140 tours/min) jusqu'à 60 secondes ;

• A T = 1 minute : arrêter le malaxage et laisser reposer pendant 4 minutes ;
• A T = 5 minutes : ajouter le liant hydraulique ;
• A T = 6 minutes : malaxer pendant 1 minute à petite vitesse (140 tours/min) ;
• A T = 7 minutes : ajouter l'eau de gâchage en 30 secondes (tout en malaxant à petite vitesse (140 tours/min)) ; et
• A T = 7 minutes et 30 secondes : malaxer pendant 2 minutes à petite vitesse (140 tours/min).

Formulation de béton

Les formulations (2), (3) et (4) de béton utilisées pour réaliser les essais sont décrites dans les tableaux 2, 3 et 4 suivants :

Tableau 2 : Formulation (2) de béton

| Composant | Proportion (% en poids par rapport au poids de la composition) |
|---|---|
| Ciment Portland Lafarge Val d'Azergues | 16,5 |
| Filler calcaire BETOCARB HP Orgon | 8,5 |
| Sable 0/4 (taux d'humidité 2,19 %) | 35,8 |
| Gravier 5/10 (taux d'humidité 0,26 %) | 29,2 |
| Eau de gâchée | 8,1 |
| Adjuvant Optima 203 | 1,9 |

Le rapport eau/ciment est de 0,493.

Tableau 3 : Formulation (3) de béton

| Composant | Proportion (% en poids par rapport au poids de la composition) |
|---|---|
| Ciment TX Active Italcementi | 16,5 |
| Filler calcaire | 8,5 |
| Sable 0/4 (taux d'humidité 2,19 %) | 35,8 |
| Gravier 5/10 (taux d'humidité 0,26 %) | 29,2 |
| Eau de gâchée | 8,1 |
| Adjuvant Optima 203 | 1,9 |

Le rapport eau/ciment est de 0,493.

Tableau 4 : Formulation (4) de béton à ultra hautes performances

| Composant | Proportion (% en poids par rapport au poids de la composition) |
|---|---|
| Ciment Portland Blanc Lafarge Le Teil | 31,0 |
| Filler calcaire DURCAL 1 | 9,3 |
| Fumées de silice MST | 6,8 |
| Sable BE01 | 44,4 |
| Eau de gâchée | 7,1 |
| Adjuvant Ductal F2 | 1,4 |

Le rapport eau/ciment est de 0,26. Il s'agit d'un béton à ultra hautes performances non fibré.

Tableau 5 : Formulation (5) de béton additionné de charbons actifs dans la masse

| Composant | Proportion (% en poids par rapport au poids de la composition) |
|---|---|
| Ciment Portland Lafarge St Pierre la Cour | 16,4 |
| Filler calcaire BETOCARB HP Orgon | 8,4 |
| Charbons actifs | 0,25 |
| Sable 0/1 | 26,3 |
| Sable 1/5 | 8,8 |
| Gravier 5/10 | 29,3 |
| Eau de pré-mouillage | 3,4 |
| Eau de gâchée | 6,9 |
| Adjuvant Optima 203 | 0,25 |

Le rapport eau efficace/ciment+ajouts est de 0,59. Le ciment Portland de Lafarge est un ciment CEM I 52,5 PMES.

Méthode de préparation du béton selon les formulations (2), (3) et (5)

Le béton est réalisé au moyen d'un malaxeur de type SIPE. L'ensemble de l'opération est réalisé à 20°C. La méthode de préparation comprend les étapes suivantes :

- A T = 0 seconde : mettre les graviers et sables dans le bol de malaxeur et malaxer durant 20 secondes ;
- A T = 20 secondes : ajouter le ciment et le filler (et les charbons actifs si nécessaire) et malaxer pendant 15 secondes (140 tours/min) ; et
- A T = 35 secondes : ajouter de l'eau et l'adjuvant et malaxer pendant 180 secondes (140 tours/min).

Méthode de préparation du béton à ultra hautes performances selon la formulation (4)

Le béton à ultra haute performance est réalisé au moyen d'un malaxeur de type RAYNERI. L'ensemble de l'opération est réalisé à 20°C. La méthode de préparation comprend les étapes suivantes :

- A T = 0 seconde : mettre le ciment, les fillers calcaire, les fumées de silice et le sable dans le bol de malaxeur et malaxer durant 7 minutes (15 tours/min) ;
- A T = 7 minutes : ajouter l'eau et la moitié de la masse d'adjuvant et malaxer pendant 1 minute (15 tours/min) ;
- A T = 8 minutes : ajouter le restant d'adjuvant et malaxer pendant 1 minute (15 tours/min) ;
- A T= 9 minutes : malaxer pendant 8 minutes (50 tours/min) ; et
- A T= 17 minutes : malaxer pendant 1 minute (15 tours/min).

Méthode de fabrication d'un échantillon

Du béton ou du mortier est préparé selon l'une des formulations (1) à (5) des tableaux 1 à 5 précédents. Une heure avant de couler le béton ou le mortier, un moule en acier est enduit par pulvérisation d'un agent de décoffrage liquide à raison de 15 g/m$^2$. L'échantillon est démoulé après 20 heures et est stocké au moins 28 jours à atmosphère ambiante (température de 25°C et humidité de 50 %).

L'échantillon a une forme parallélépipédique ayant une hauteur de 15 cm environ, une largeur de 12 cm environ et une épaisseur de 1,5 cm environ. Les faces latérales et l'une des grandes faces de l'échantillon sont recouvertes d'une résine et sont ainsi rendues étanches. La grande face libre restante a une surface comprise de 180 à 200 cm$^2$.

Méthode de mesure de la surface spécifique BET

La surface spécifique des différentes poudres est mesurée comme suit. On prélève un échantillon de poudre de masse comprise de 0,3 g à 0,75 g pour une surface BET estimée à plus de 15 m$^2$/g. On utilise une cellule de 9 cm$^3$. On pèse l'ensemble de la cellule de mesure (cellule + tige en verre). Puis on ajoute l'échantillon dans la cellule. On pèse l'ensemble (cellule + tige en verre + échantillon). On met en place la cellule de mesure sur un poste de dégazage et on dégaze l'échantillon. La pression à atteindre est de 25 à 30 mTorr. La durée pour atteindre cette pression dépend de la nature de l'échantillon, de la quantité de matière et du nombre de cellules installées sur le poste de dégazage. L'étape de dégazage permet de débarrasser la surface de l'échantillon de toute adsorption ($H_2O$, CO, $CO_2$, ...). La masse de l'échantillon est obtenue par soustraction de la masse de la cellule à la masse de la cellule + échantillon dégazé.

On effectue ensuite l'analyse de l'échantillon après l'avoir mis en place sur le poste de mesure. L'analyseur est le Tristar II 3020, commercialisé par la société Micromeritics. La mesure repose sur l'adsorption d'azote par l'échantillon à une température donnée, ici la température de l'azote liquide soit -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. Les trois échantillons ci-dessous sont mesurés régulièrement afin de servir de référence pour l'appareil :

| | moyenne BET (m$^2$/g) | écart type |
|---|---|---|
| Alumine BCR 1.05m$^2$/g | 1,02 | 0,02 |
| Omyacoat 850 | 9,38 | 0,04 |
| Carbone 30.6 $\pm$ 0.75m$^2$/g | 30,4 | 0,25 |

<u>Méthode de mesure de la porosité de surface et du diamètre moyen d'entrée des pores de surface (porosimétrie au mercure)</u>

Un porosimètre à mercure Autopore III a été utilisé. Les échantillons de béton analysés se présentent sous la forme de petits blocs d'une dimension typique de quelques millimètres à 1 cm et ils sont préalablement séchés à 45°C pendant 8 h. Le mercure est mis au contact d'un échantillon et une pression est exercée sur l'échantillon pour faire pénétrer le mercure dans les pores de l'échantillon. Le volume de mercure pénétrant dans les pores de l'échantillon sous l'action de la pression est mesuré, par un système capacitif, en fonction de la pression appliquée à l'échantillon. L'équation de Washburn (1) permet de relier la pression au diamètre des pores. Les calculs de la porosité reposent sur l'équation qui exprime la pénétration d'un liquide non mouillant (le mercure) dans les pores d'un matériau poreux. Le calcul est fait en considérant que l'angle de mouillage du mercure est de 130° (sur le verre comme sur la plupart des solides) et la tension superficielle est égale 480 mN/m (à 20°C°).

$$P = \frac{-\gamma \cos\theta}{r} \qquad (1)$$

P est la pression de mercure (Pa),
$\gamma$ est la tension superficielle du liquide (N/m),
$\theta$ est l'angle de contact entre le solide et liquide.
r est le diamètre de pore.

A noter que le diamètre calculé correspond en réalité au diamètre d'entrée du pore. La distribution de porosités, donnée par la mesure de porosité par intrusion de mercure, est exprimée en % ou en millilitre de mercure par gramme d'échantillon. Le diamètre moyen des pores en surface du corps en béton a été retenu en relevant la population majoritaire des diamètres de pores relevés, ce diamètre moyen est exprimé en $\mu$m.

Les mesures de porosité mercure (MIP) sont effectuées sur des échantillons de bétons tel quel et d'autres enduits de résine pour ne laisser que la surface apparente. La résine étant supposée non poreuse, le mercure ne peut alors pénétrer dans l'échantillon que par la surface. La comparaison des deux mesures de porosité permet de déduire si les tailles des pores sont les mêmes à la surface et au coeur de l'échantillon. La masse utilisée pour la normalisation est celle de l'échantillon sans résine, car celle de l'échantillon avec résine est faussée par la présence de résine.

<u>Méthode de mesure de l'adsorption d'oxydes d'azote par un échantillon</u>

La méthode consiste à placer un échantillon dans une chambre (échantillon cylindrique à base circulaire de diamètre de 22 cm et de hauteur de 10 cm, soit un volume de 3,8 litres) dans laquelle on fait circuler un flux gazeux, avec un débit de 1 L/min, comprenant des oxydes d'azote et à mesurer la quantité d'oxydes d'azote contenus dans le flux gazeux en aval de la chambre.

Le flux gazeux comprend un mélange homogène d'azote ayant une humidité relative de 60 %, de monoxyde d'azote NO avec une concentration de 500 ppbv (parties par milliard en volume) et de dioxyde d'azote $NO_2$ avec une concentration de 250 ppbv.

On utilise un échantillon ayant une surface externe comprise de 180 à 200 $cm^2$. Des mesures des concentrations de NO et de $NO_2$ dans le flux gazeux en aval de l'échantillon sont réalisées de façon périodique, par exemple toutes les minutes. Le suivi des concentrations des NOx est réalisé en ligne par chimiluminescence. Les seuils de détection de ce type d'analyseurs sont de l'ordre de la ppbv.

## EXEMPLE 1 - **Exemple comparatif**

On a préparé un béton ayant la formulation (2) décrite précédemment. Un échantillon, « A », a été réalisé avec ce béton selon la méthode de fabrication d'un échantillon décrite précédemment dans laquelle l'agent de décoffrage est composé d'huile végétale Dem ECO2. La porosité de surface de l'échantillon A est de 13 % et le diamètre d'entrée des pores de surface est de 0,32 $\mu$m.

Une mesure de l'adsorption de monoxyde d'azote et de dioxyde d'azote par l'échantillon A a été réalisée selon la méthode de mesure de l'adsorption d'oxydes d'azote décrite précédemment.

## EXEMPLE 2 - **Exemple comparatif**

On a préparé un béton ayant la formulation (4) décrite précédemment qui correspond à un béton à ultra haute performance. Un échantillon, « B », a été réalisé avec ce béton selon la méthode de fabrication d'un échantillon décrite précédemment dans laquelle l'agent de décoffrage est composé d'huile végétale Dem ECO2. La porosité de surface de l'échantillon B est de 8 % et le diamètre d'entrée des pores de surface est de 0,02 $\mu$m.

Une mesure de l'adsorption de monoxyde d'azote et de dioxyde d'azote par l'échantillon B a été réalisée selon la méthode de mesure de l'adsorption d'oxydes d'azote décrite précédemment.

## EXEMPLE 3 - Exemple comparatif

On a préparé un béton ayant la formulation (3) décrite précédemment qui correspond à un béton contenant du dioxyde de titane photocatalytique. Un échantillon, « C », a été réalisé avec ce béton selon la méthode de fabrication d'un échantillon décrite précédemment dans laquelle l'agent de décoffrage est composé d'huile végétale Dem ECO2. La porosité de surface de l'échantillon C est de 10 % et le diamètre d'entrée des pores de surface est de 0,10 $\mu$m.

Une mesure de l'adsorption de monoxyde d'azote et de dioxyde d'azote par l'échantillon C a été réalisée selon la méthode de mesure de l'adsorption d'oxydes d'azote décrite précédemment.

## EXEMPLE 4

On a préparé un mortier ayant la formulation (1) de mortier décrite précédemment. Un échantillon, « D », a été réalisé avec ce mortier selon la méthode de fabrication d'un échantillon décrite précédemment dans laquelle l'agent de décoffrage comprend de l'huile végétale Dem ECO2 et 5 % en poids par rapport au poids de l'agent de décoffrage de charbons actifs. La surface spécifique des charbons actifs est de 695 m$^2$/g (+/- 50) et a été mesurée par la méthode de mesure de la surface spécifique BET décrite précédemment. La porosité de surface de l'échantillon D est de 16 % et le diamètre d'entrée des pores de surface est de 0,39 $\mu$m.

Une mesure de l'adsorption de monoxyde d'azote et de dioxyde d'azote par l'échantillon D a été réalisée selon la méthode de mesure de l'adsorption d'oxydes d'azote décrite précédemment.

## EXEMPLE 5

On a préparé un mortier ayant la formulation (5) de mortier décrite précédemment et comprenant 1,5 % en poids par rapport au poids du ciment de charbons actifs. Un échantillon, « E », a été réalisé avec ce mortier selon la méthode de fabrication d'un échantillon décrite précédemment dans laquelle l'agent de décoffrage comprend de l'huile végétale Dem ECO2. La surface spécifique des charbons actifs est de 695 m$^2$/g (+/- 50) et a été mesurée par la méthode de mesure de la surface spécifique BET décrite précédemment. La porosité de surface de l'échantillon E est de 18 % et le diamètre d'entrée des pores de surface se situe entre 0,22 et 0,60 $\mu$m.

Une mesure de l'adsorption de monoxyde d'azote et de dioxyde d'azote par l'échantillon E a été réalisée selon la méthode de mesure de l'adsorption d'oxydes d'azote décrite précédemment.

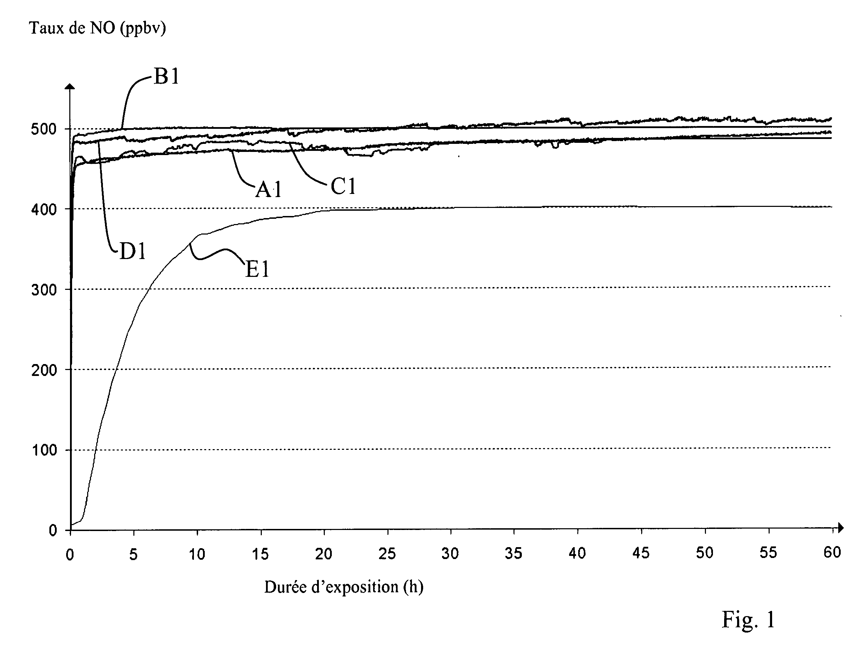

La figure 1 représente les courbes d'évolution A1, B1, C1, D1 et E1 de teneur en monoxyde d'azote d'un flux gazeux respectivement après son passage au niveau des échantillons A, B, C, D et E. La courbe D1, qui correspond à un échantillon en mortier, peut être comparée aux courbes A1, B1 et C1 qui correspondent à des échantillons en béton. En effet, les propriétés de surface (notamment la porosité de surface) d'un échantillon sont reliées directement à la peau de l'échantillon (les premiers millimètres d'épaisseur de l'échantillon) et sont indépendantes de la présence ou de l'absence de granulats dans l'échantillon. De ce fait, la même courbe D1 serait obtenue avec un béton équivalent au mortier de la formulation (1).

Chaque courbe A1, B1, C1 et D1 comporte une phase initiale d'adsorption du monoxyde d'azote qui dure environ une heure suivie d'une phase pendant laquelle l'échantillon n'adsorbe sensiblement plus de monoxyde étant donné que la teneur en monoxyde d'azote dans le flux aval est sensiblement identique à la teneur (500 parties par milliards en volume ou 500 ppbv) en amont de l'échantillon. La courbe E1 montre que la phase d'adsorption de NO est plus significative et pérenne sur toute la durée d'exposition. Un taux d'adsorption de 5,0 ppmv/m$^2$ (parties par millions en volume par mètre carré) en NO est ainsi calculé.

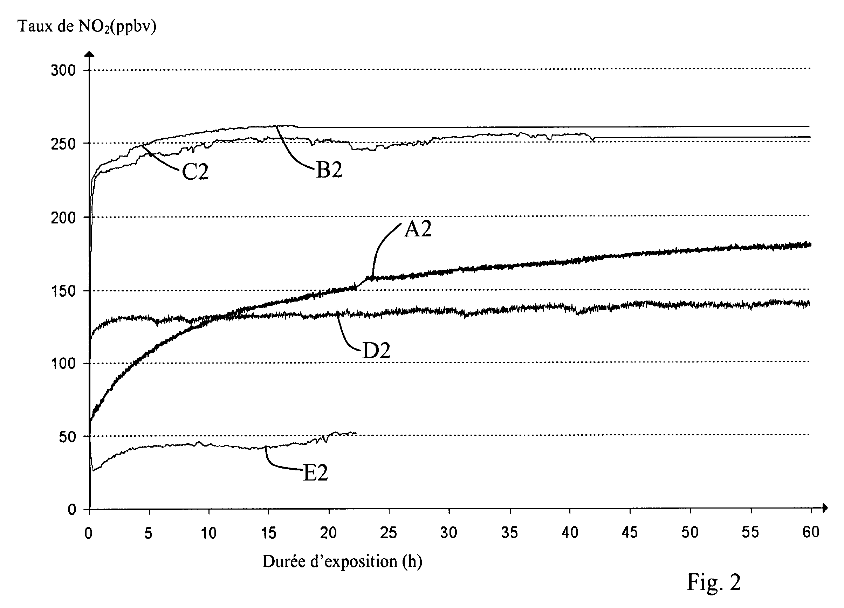

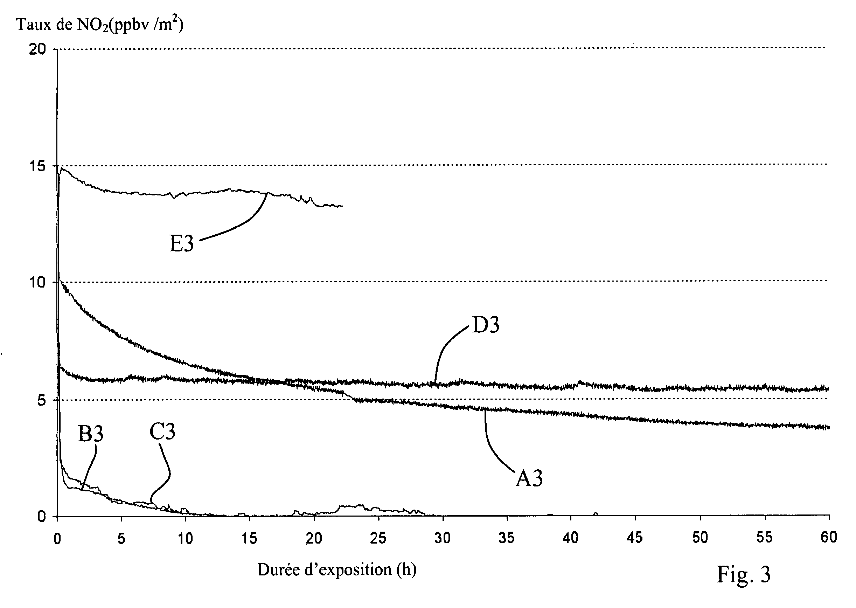

La figure 2 représente les courbes d'évolutions A2, B2, C2, D2 et E2 de teneur en dioxyde d'azote d'un flux gazeux respectivement après son passage respectivement au niveau des échantillons A, B, C, D et E. La figure 3 représente les courbes d'évolution A3, B3, C3, D3 et E3 de taux de dioxyde d'azote absorbés par unité de surface respectivement pour les échantillons A, B, C, D et E.

On observe une adsorption durable du dioxyde d'azote par l'échantillon A. Le taux d'adsorption par unité de surface est initialement d'environ 9,3 ppmv/m$^2$ (après 1 h) et diminue dans le temps. Après 600 min (10 h), il est de 6,5 ppmv/m$^2$. Enfin, après 3600 min. (60 h), il est de 3,6 ppmv/m$^2$.

On observe une faible adsorption de dioxyde d'azote par les échantillons B et C. Plus précisément, le taux d'adsorption par unité de surface est initialement inférieur à 2,0 ppmv/m$^2$ puis diminue rapidement pour être sensiblement égal à zéro après quelques centaines de minutes.

On observe une adsorption durable du dioxyde d'azote par l'échantillon D. Le taux d'adsorption par unité de surface est initialement de 6,1 ppmv/m$^2$ (après 1 h) et diminue très lentement dans le temps. Après 3600 min (60 h), il est de 5,4 ppmv/m$^2$. Après environ 1000 min, le taux d'adsorption de l'échantillon D réalisé selon la présente invention est plus élevé que le taux d'adsorption de l'échantillon A réalisé sans utilisation de charbon actif. La présente invention permet donc de maintenir un taux d'adsorption élevé de dioxyde d'azote dans le temps.

On observe une adsorption durable et quasi-complète du dioxyde d'azote par l'échantillon E. Le taux d'adsorption par unité de surface est initialement de 14,7 ppmv/m$^2$ (après 1 h) et diminue très lentement dans le temps. Après 1320 min (22 h), il est de 13,2 ppmv/m$^2$. Après environ 1000 min, le taux d'adsorption de l'échantillon E réalisé selon la présente invention est plus élevé que le taux d'adsorption de l'échantillon A réalisé sans utilisation de charbon actif dans la masse. La présente invention permet donc de maintenir un taux d'adsorption très élevé de dioxyde d'azote dans le temps.

## EXEMPLE 6

Après avoir mesuré l'adsorption du monoxyde d'azote et du dioxyde d'azote par l'échantillon D selon l'invention à l'exemple 4, l'échantillon D a été disposé dans une enceinte dans laquelle circule un flux d'un gaz neutre à la pression atmosphérique. Les teneurs en monoxyde d'azote et en dioxyde d'azote dans le flux en aval de l'échantillon D ont été mesurées. L'échantillon D a été maintenu à une température de 115°C pendant 400 minutes.

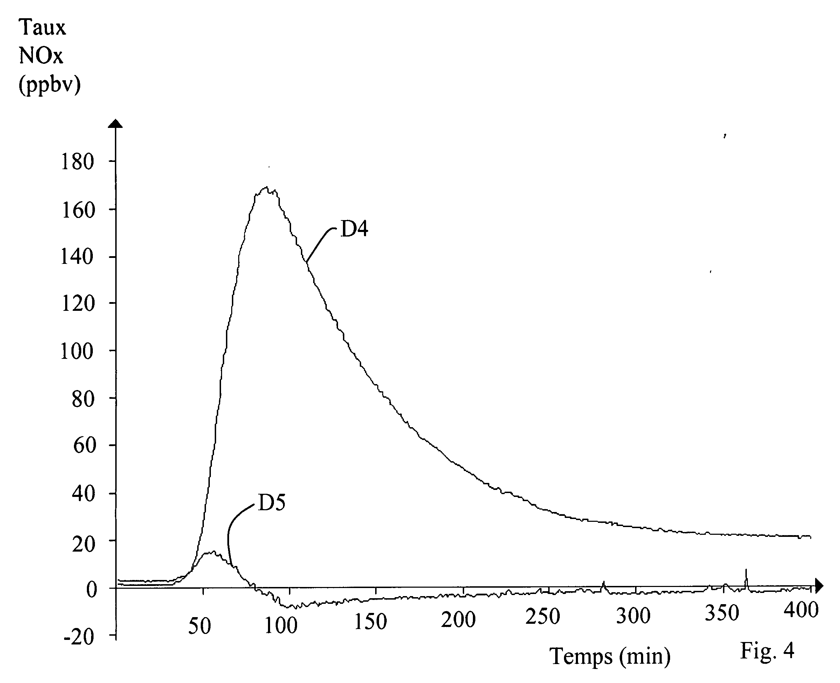

La figure 4 représente la courbe d'évolution D4 de la teneur en monoxyde d'azote dans le flux en aval de l'échantillon D et la courbe d'évolution D5 de la teneur en dioxyde d'azote dans le flux en aval de l'échantillon D. L'échantillon D libère le monoxyde d'azote adsorbé lorsqu'il est chauffé. Toutefois, le dioxyde d'azote n'est pas libéré par l'échantillon D même lorsque celui-ci est chauffé à plus de 100°C.

## Revendications

1. Utilisation d'un élément comprenant un corps monobloc en béton dont le volume est supérieur à 1 L pour la suppression de l'atmosphère d'au moins les oxydes d'azote, **caractérisée en ce que** ledit élément a une porosité de surface mesurée par mercure strictement supérieure à 8 %, et **en ce que** ledit élément comprend, dans le corps en béton et/ou en surface du corps en béton, un composé choisi parmi le groupe comprenant le charbon actif ou le charbon actif greffé avec des fonctions chimiques supplémentaires ou traité thermiquement, et ayant une surface spécifique d'échange BET mesurée par azote supérieure à 100 m$^2$/g, et **en ce que** ledit élément ne comprenant pas d'agent photocatalytique.

2. Utilisation selon la revendication 1, dans laquelle la surface spécifique d'échange BET du composé est supérieure à 500 m$^2$/g.

3. Utilisation selon l'une des revendications 1 ou 2, dans laquelle le composé comprend des particules ayant un diamètre moyen supérieur à 1 μm.

4. Utilisation selon l'une quelconque des revendications 1 à 3, dans laquelle le béton a une porosité de surface supérieure à 8 % mesurée par mercure.

5. Utilisation selon l'une quelconque des revendications 1 à 4, dans laquelle le diamètre moyen des pores en surface du corps est supérieur à 0,10 μm.

6. Utilisation selon l'une quelconque des revendications 1 à 5, dans laquelle le composé est réparti dans la totalité du corps en béton.

7. Utilisation selon l'une quelconque des revendications 1 à 6, dans laquelle le corps en béton est obtenu par coulage du béton dans un moule, et dans lequel le composé est disposé dans une composition de démoulage du moule.

8. Utilisation selon l'une quelconque des revendications 1 à 6, dans laquelle l'élément est obtenu par mélange d'un liant hydraulique, de granulats, dudit composé et d'eau.

9. Utilisation selon l'une quelconque des revendications 1 à 8, dans laquelle le taux d'adsorption de dioxyde d'azote par unité de surface est supérieur à 0,5 ppbv/cm$^2$.

**Patentansprüche**

1. Verwendung eines Elements, umfassend einen einstückigen Körper aus Beton, dessen Volumen größer als 1 L ist, für die Entfernung aus der Atmosphäre mindestens der Stickoxide, **dadurch gekennzeichnet, dass** das Element eine Oberflächenporosität, gemessen durch Quecksilber, von streng mehr als 8 % aufweist, und dadurch, dass das Element, im Körper aus Beton und/oder auf der Oberfläche des Körpers aus Beton, eine Verbindung umfasst, ausgewählt aus der Gruppe, umfassend Aktivkohle oder Aktivkohle, versehen mit zusätzlichen chemischen Funktionen oder wärmebehandelt, und aufweisend eine spezifische Austauschoberfläche BET, gemessen durch Stickstoff, von mehr als 100 m$^2$/g, und dadurch, dass das Element kein photokatalytisches Mittel umfasst.

2. Verwendung nach Anspruch 1, wobei die spezifische Austauschoberfläche BET der Verbindung größer als 500 m$^2$/g ist.

3. Verwendung nach einem der Ansprüche 1 oder 2, wobei die Verbindung Partikel umfasst, die einen mittleren Durchmesser von mehr als 1 µm aufweisen.

4. Verwendung nach einem der Ansprüche 1 bis 3, wobei der Beton eine Oberflächenporosität von mehr als 8 %, gemessen durch Quecksilber, aufweist.

5. Verwendung nach einem der Ansprüche 1 bis 4, wobei der mittlere Durchmesser der Poren auf der Oberfläche des Körpers größer als 0,10 µm ist.

6. Verwendung nach einem der Ansprüche 1 bis 5, wobei die Verbindung in der Gesamtheit des Körpers aus Beton verteilt ist.

7. Verwendung nach einem der Ansprüche 1 bis 6, wobei der Körper aus Beton durch Gießen des Betons in eine Form erhalten wird, und wobei die Verbindung in einer Zusammensetzung zur Entfernung der Form angeordnet ist.

8. Verwendung nach einem der Ansprüche 1 bis 6, wobei das Element durch Mischung eines hydraulischen Bindemittels, von Granulaten, der Verbindung und Wasser erhalten wird.

9. Verwendung nach einem der Ansprüche 1 bis 8, wobei die Adsorptionsrate von Stickstoffdioxid pro Oberflächeneinheit größer als 0,5 ppbv/cm$^2$ ist.


**Claims**

1. Use of an element comprising a one-piece body made from concrete of which the volume is greater than 1 L for the suppression from the atmosphere of at least nitrogen oxides, **characterised in that** said element has a surface porosity measured by mercury strictly greater than 8%, and **in that** said element comprises, in the body made from concrete and/or at the surface of the body made from concrete, a compound chosen from the group comprising activated charcoal or activated charcoal grafted with additional chemical functions or treated thermally, and having a BET specific exchange surface measured by nitrogen greater than 100 m$^2$/g, and **in that** said element contains no photocatalytic agent.

2. Use according to claim 1, wherein the BET specific exchange surface of the compound is greater than 500 m$^2$/g.

3. Use according to one of claims 1 or 2, wherein the compound comprises particles that have an average diameter greater than 1 µm.

4. Use according to any of claims 1 to 3, wherein the concrete has a surface porosity greater than 8% measured by mercury.

5. Use according to any of claims 1 to 4, wherein the average diameter of the pores on the surface of the body is greater than 0.10 µm.

6. Use according to any of claims 1 to 5, wherein the compound is distributed across the entire concrete body.

7. Use according to any of claims 1 to 6, wherein the concrete body is obtained by casting concrete in a mould, and wherein the compound is disposed in a mould-release composition of the mould.

8. Use according to any of claims 1 to 6, wherein the element is obtained by mixing a hydraulic binder, aggregates, said compound and water.

9. Use according to any of claims 1 to 8, wherein rate of adsorption of nitrogen dioxide per unit of surface is greater than 0.5 ppbv/cm$^2$.

Fig. 1

EP 2 488 279 B1

Fig. 2

Fig. 3

EP 2 488 279 B1

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9805601 A

- JP 2007170040 A